# EUROPEAN PATENT APPLICATION

(11) **EP 2 608 019 A1**
(43) Date of publication of application: **26.06.2013**
(21) Application number: 11195284.2
(22) Date of filing: 22.12.2011
(51) Int. Cl.: G06F 9/44

(54) **Customizing a GUI of a MES screen**

(71) Applicant: Siemens Aktiengesellschaft, 80333 München (DE)
(72) Inventor: Colletti, Paola, 16132 Genova (IT); Noferi, Stefano, 16149 Genova (IT)
(74) Representative: Fischer, Michael

(57) **Abstract**

The present invention provides a method and system for customizing a user-interface of a screen of a general purpose MES software application taking into account a specific customer requirement, the screen being a web-page, hereinafter called page-screen; the invention comprising: a) providing, for at least one page-screen, a toolbar which is a configurable graphic control, herein after referred as configurable toolbar, wherein the configurable toolbar comprises a set of command controls; b) providing the possibility to add, to the set of command controls, at least one custom command control which, if activated at run-time, is executing a custom functionality; c) providing a graphic configuration tool for enabling the configuration of the configurable toolbar; d) at engineering time, through the configuration tool, exploring the page-screen so that the configurable toolbar is presented with the set of command controls; e)at engineering time, through the configuration tool, adding, to the set of command controls, at least one custom command control implementing the custom functionality; f) at engineering time, through the configuration tool, specifying the information required for the execution of the least one custom command control.

## Description

The present invention relates to a method and to a system for customizing a GUI of a MES screen according to the preamble of claims 1 and 5 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers, at developing time, to perform some useful actions within a MES system, e.g. monitoring values coming from plant process or controlling a plant device.

Typically, at engineering or configuration time, system engineers flexibly customize MES applications according to the specific manufacturing plant requirements.

Instead, at runtime, MES applications are utilized by end-users who may be plant operators or line responsible personnel.

MES systems are provided with front-end/client GUI applications which may be used by end-users to plan and control manufacturing activities.

MES GUI applications play a key role in bringing together process, quality and business information from various sources into one unified real-time view of the production status of the plant. In fact, MES GUI applications display to the end-user graphical screens which enable overview several parameters or scenarios of the plant activities.

Nowadays MES screens are mostly developed in form of web-pages.

For example, with MES application suite SIMATIC IT, it is provided a Client Application Builder which is composed of a set of modules allowing users to build customized GUI screen-pages.

Typically, software suppliers develop a MES software-product as a general purpose solution to meet several and different customer requirements. As a consequence to it, also the collections of MES screens, which are supplied with the MES product, are designed, at page developing time, to be general purpose in order to be used in various different situations. However, since customers require that MES products be customized for a specific project fitting their specific needs, also the GUIs of MES screens need to be customized in order to satisfy the customer requirements of the specific project. This customer need is a fundamental one since the end-users, at the customer site, interact with the MES product mainly through the GUI of the MES-screens.

Hence, some enhancement needs of MES customers have to be fulfilled on the specific single project, so that the effectiveness and the usability of the MES solution are improved.

An enhancement need of MES customers regards the possibility to enable the system engineer to add project specific functionalities to the MES screen.

Hence it is seen that, since different MES customers have different requirements, different types of customizations are needed.

In the art, the customization problem of MES screen has been solved in two ways.

According to a first way, the source codes of the screens are delivered to the system engineers or to the system integrators who modify them according to the required customizations. This action has relevant cost impacts in terms of required time and efforts. In addition, another drawback is that the proprietary source code is exposed to third parties that who often are not employees of the software developing company with an evident intellectual property problem.

According to a second way, the screens are developed from scratch by the software developers in order to meet the customer needs. A brand new web-page, in replace of the original one, is to be created containing the required customizations. Unfortunately this second way has the drawback that it is not possible to develop general-purpose screens but only project-specific ones. The customization is customer-specific: a new modified version of the page is created. This action has a very high effort: effort of time for the analysis of the original page (the person who customize the screen is not usually the same who created it); effort of time to modify the page; effort of time to test the page (also some solid regression test is needed); effort to maintain a different version of the same page for different customers
Unfortunately, in both known ways of customizing MES web-screens, the source code of the web-page has to be modified. This fact implies that the source code of the product-delivered screens needs to be completely tested again, with the relevant cost impacts in terms of time and efforts, also taking into account requirements on code maintenance and upgrades.

Moreover, with known methods of customizing MES web-screens, not only the development and customization efforts are increased but also the reusability of the delivered web-screens is reduced.

It is therefore the aim of the present invention to overcome the above mentioned drawbacks, in particular by providing a method and a system for customizing a GUI of a MES screen without modifying the source code of the web-screen.

The aforementioned aim is achieved by a method and a system as set forth in the appended claims.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention advantageously enable customizations by changing the page configuration through a dedicated tool so that the source code is not modified.

Embodiments of the invention conveniently lead to cost reductions, for the following reasons:
- Required efforts for customizing the web screens are reduced.
- Required maintenance of the software product is reduced.
- The approach is less error prone
- No need of an exhaustive analysis and of knowledge of the original page design.
- No regression test is needed for the web-page.

The customizations implemented through the proposed invention are not coded on the page so that in case of error they can be removed without affecting the original functionality of the original page supplied by the product.

With invention embodiments, the intellectual property of the original page is preserved.

The invention will now be described in preferred but not exclusive embodiments with reference to the accompanying drawings, wherein:
- Figure 1: is a snapshot example taken from an input grid of a page-screen GUI, delivered with a general purpose MES software product, according to a first example embodiment of the present invention;
- Figure 2: is a snapshot example taken from a modified version of the input grid of Figure 1 according to the first example embodiment of the present invention;
- Figure 3: is a snapshot example of a GUI configuration editor of the GUI configuration tool, according to the first example embodiment of the present invention;
- Figure 4: is a snapshot example taken from a modified version of the general purpose page-screen according to a second example embodiment of the present invention;
- Figure 5: is a snapshot example taken from an input grid of a page-screen GUI, delivered with a general purpose MES software product, according to a third example embodiment of the present invention;
- Figure 6: is a snapshot example taken from a modified version of the input grid of Figure 5 according to the third example embodiment of the present invention;
- Figure 7: is a snapshot example of a GUI configuration editor of the GUI configuration tool, according to the third example embodiment of the present invention.

According to the present invention, a user-interface of a screen of a general purpose MES software application is customized taking into account a specific customer requirement. The screen is a web-page, herein called page-screen.

Within the SIMATIC MES application suite, the MES page screens are built via the Client Application Builder which is a web- based, Graphical User Interface for building cross-functionality graphic screens. The Client Application Builder of SIMATIC IT is based on Microsoft ASP.NET technology, so when the page is rendered on the client, it is composed by HTML and script.

For at least a page-screen, a toolbar is provided which is a configurable graphic control, herein called configurable toolbar. Within the configurable toolbar, a set of command controls are present.

As used herein, the term "command control" is used as a generic term to define a graphical user interface control which can be for example a button, a combo-box, an edit box, a radio button, and similar or any combination thereof.

To the set of command controls, it is provided the possibility to add at least one custom command control which, if activated at run-time, is executing a desired custom functionality.

A graphic configuration tool is provided for enabling the configuration of the configurable toolbar in a graphic way by generating a configuration file containing the relevant information for the execution of the command controls, i.e. for both custom command controls and non-custom command controls.

At engineering time, through the configuration tool, the page-screen is explored so that the configurable toolbar is presented with the set of command controls.

At engineering time, through the configuration tool, it is added, to the set of command controls, at least one custom command control in order to implement the custom functionality.

At engineering time, through the configuration tool, it is specified the information required for the execution of the least one custom command control. This information is stored in a configuration file which in turn will be read at run time by the toolbar. The configuration file may be stored on the web server or on a database.

In a first invention embodiment, the at least one custom command control may advantageously be a toolbar button which, when clicked at run time, opens up a pop-up window containing a given custom control.

In a second invention embodiment, the at least one custom command control may preferably be a toolbar command control which, when activated at run-time, loads a given custom control which defines the layout and the functionality of the toolbar command control.

In a third invention embodiment, the at least one custom command control may conveniently be a toolbar button which, when clicked at run-time, calls a method implemented in a custom library or module.

At run time, a user-interface of a screen of a general purpose MES software application may advantageously be displayed with the above described customizations. Advantageously, the configurable toolbar may be a graphic tool available for the developer at page developing time who wishes to create general purpose screens and then part of the integrated developer environment as well as may be a graphic toll available to the system engineer who desire to add some functionalities, according to specific customer requirements, without accessing the source code, then part of a browser.

### Example of first embodiment

An example of the first embodiment of the present invention is described below.

Let us assume that a system engineer desires to extend the functionalities of a screen-page having a configurable toolbar by, for example, allowing to open from a screen-page a pop-up window showing a given detail of a selected record on a grid.

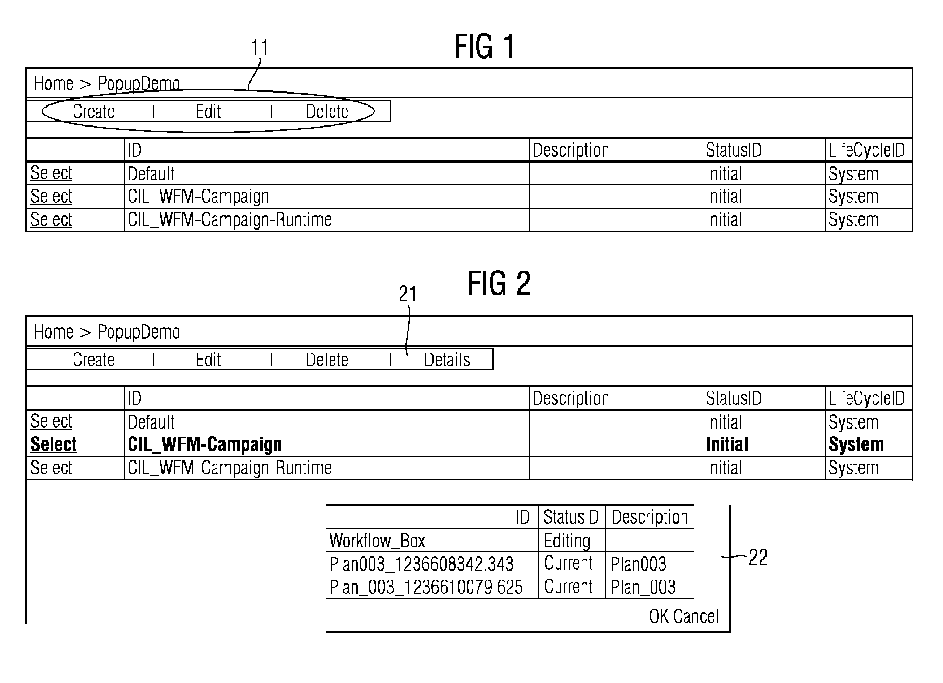

Figure 1 is a snapshot example taken from an input grid of a page-screen GUI, delivered with a general purpose MES software product, according to the first example embodiment of the present invention. The delivered page-screen of Figure 1 shows a grid with a set of MES entities, whose IDs are "Default", "CIL_WFM-Campaign", "CIL_WFM-campaign-Runtime", and gives the user the possibility to Create/Delete/Edit such entities by means of a toolbar control 11.
Figure 2 is a snapshot example taken from a modified version of the input grid of Figure 1 according to the first example embodiment of the present invention. As shown in Figure 2, the system engineer, in this embodiment, has added a custom button 21, e.g. called "Details", to the configurable toolbar 11. Such added custom button "Details" 21 when clicked implements a desired custom functionality, e.g. it opens a pop-up window 22 showing some additional details belonging to the selected MES entity "CIL_WFM-Campaign" on the grid.

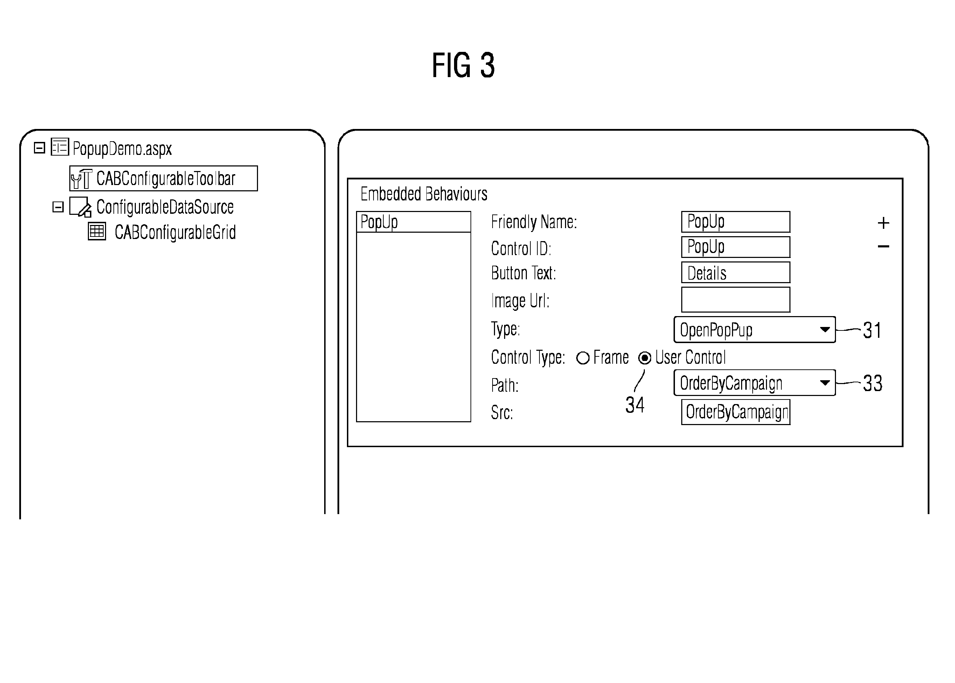

Figure 3 is a snapshot example of a GUI configuration editor of the GUI configuration tool, according to the first example embodiment of the present invention. The configuration tool shown in Figure 3 explores the website that host the page and presents on a tree the point of configuration of the system. From the configuration tool, it is possible to add to the configurable toolbar 11 on the page-screen a custom button 21 which, when clicked, is able to open a pop-up window and to load a specific custom control developed by the system engineer. The system engineer is advantageously provided with a customization point inside the page-screen supplied with a MES product. As seen in the example embodiment of Figure 3, from the graphic configuration tool, it is possible to add such a button by specifying that the added button will open a pop-up window 31, by specifying that the pop-up window will contain a user control type 32, and by specifying the path details of the user control to load 33. In addition, the context information supplied by the configuration framework may be used for loading into the user control the orders that belong to the selected campaign. With the term context information it is intended the status information of the page, e.g. the row selected, and with the term configuration framework" it is intended the set of class and services that allows the controls to be configured.

Advantageously, the extra-written code write is contained on the user control class library, without any need to access to the code of the page that has been extended.

### Example of second embodiment

An example of the second embodiment of the present invention is described below.
Let us assume that a system engineer desires to extend the functionalities of a screen-page having a configurable toolbar for example by allowing to insert in the toolbar of the page-screen a toolbar command control which, when activated at run-time, loads a given custom control.

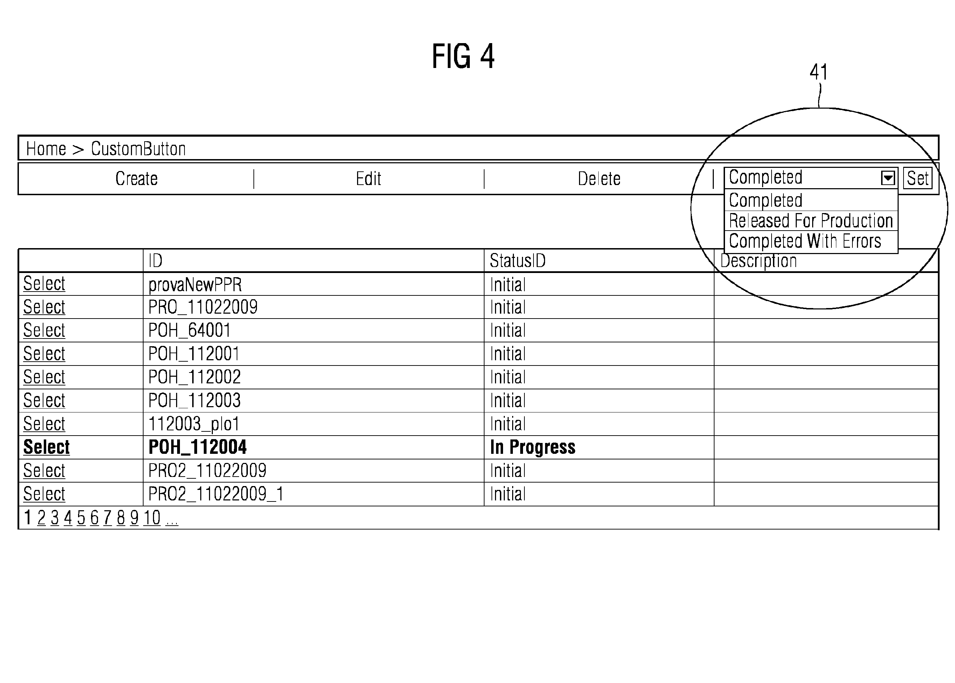

Figure 4 is a snapshot example taken from a modified version of a general purpose page-screen according to the second example embodiment of the present invention.

As shown in Figure 4, the system engineer, in this embodiment, has added a toolbar command control 41 to the screen toolbar control. Such added toolbar command control 41 in this example is a composite custom command control comprising a simple button and a combo-box. Other types of custom toolbar controls may be conveniently implemented as for example a radio button, a simple button, a combo-box or similar or any composite custom control combining several types.

A snapshot taken from the GUI configuration editor of the GUI configuration tool for this second example embodiment it is not shown.

### Example of third embodiment

An example of third embodiment of the present invention is described below.
Let us assume that a system engineer desires to extend the functionalities of a screen-page by, for example, by adding a toolbar button which, when clicked at run-time, calls a method implemented in a custom library or in a custom module performing an operation on a MES entity.

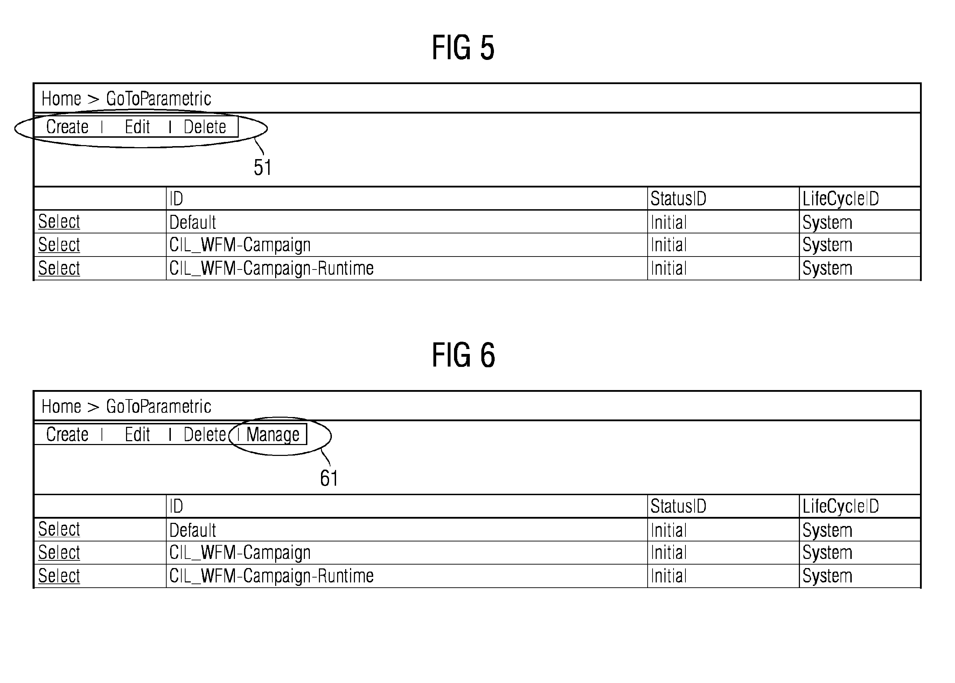

Figure 5 is a snapshot example taken from an input grid of a page-screen GUI, delivered with a general purpose MES software product, according to a third example embodiment of the present invention.

In this example, the library "source" has been delivered with a general purpose page-screen that allows to create/edit/delete a campaign. In the screen shown in Figure 5, there are a configurable toolbar 51 and a configurable grid 52 that contains a list of the MES entities, e.g. campaigns.

Figure 6 is a snapshot example taken from a modified version of the input grid of Figure 5 according to the third example embodiment of the present invention;

As shown in Figure 6, the system engineer, in this embodiment, has added a button 21, e.g. called "Manage", to the toolbar control 51. Such added button "Manage" 61 when clicked, at run time, calls a custom code implemented a custom operation on the campaign selected on the grid 52.

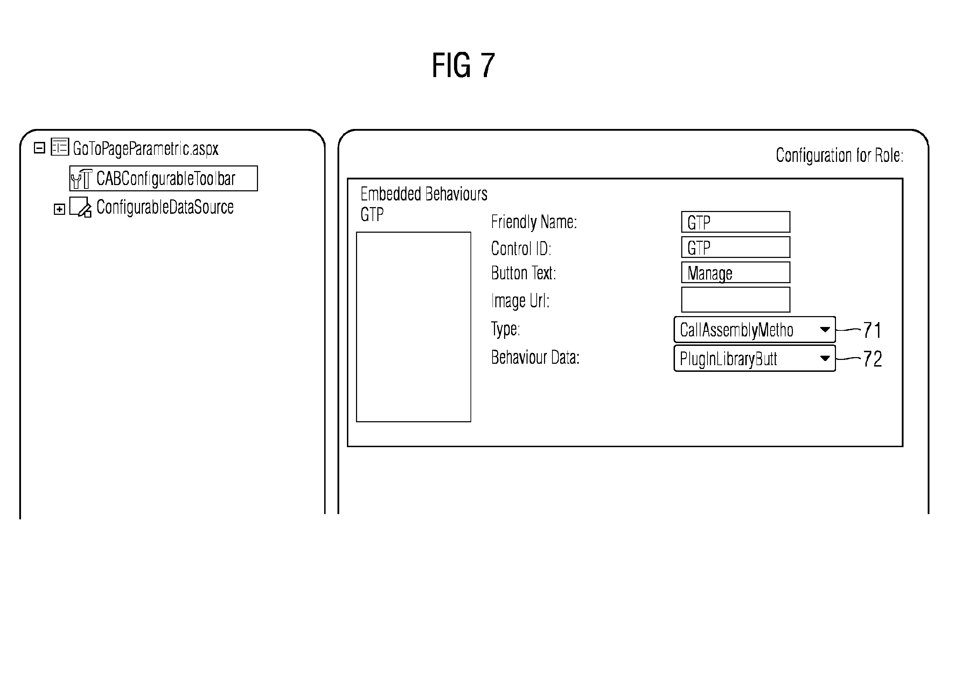

Figure 7 is a snapshot example of a GUI configuration editor of the GUI configuration tool, according to the third embodiment of the present invention.

The configuration tool shown in Figure 7 explores the website that host the page and presents on a tree the point of configuration of the system. From the configuration tool, it is possible to add to the configurable toolbar 51 on the page-screen the "Manage" button 61.

As seen in the example embodiment of Figure 7, from the graphic configuration tool, it is possible to add such "Manage" button by specifying that the added button has the behavior "CallAssembly Method" 71 and by supplying the custom code as a method of a class library by specifying on the BehaviourData the class library, the class and the method to call 72.

In addition, the context information supplied by the configuration framework may be used for retrieving the information on the selected campaign on the grid and perform the operation exactly on it.

Advantageously, the extra-written code write is contained on the class library (custom code), without any need to access to the code of the page that has been extended.

In addition to the embodiments of the present invention described above, the skilled persons in the art will be able to arrive at a variety of other arrangements and steps which, if not explicitly described in this document, nevertheless fall within the scope of the appended claims.

## Claims

1. A method for customizing a user-interface of a screen of a general purpose MES software application taking into account a specific customer requirement, the screen being a web-page, hereinafter called page-screen;
the method comprising the steps of:
a) providing, for at least one page-screen, a toolbar which is a configurable graphic control, herein after referred as configurable toolbar, wherein the configurable toolbar comprises a set of command controls;
b) providing the possibility to add, to the set of command controls, at least one custom command control which, if activated at run-time, is executing a custom functionality;
c) providing a graphic configuration tool for enabling the configuration of the configurable toolbar;
d) at engineering time, through the configuration tool, exploring the page-screen so that the configurable toolbar is presented with the set of command controls;
e) at engineering time, through the configuration tool, adding, to the set of command controls, at least one custom command control implementing the custom functionality;
f) at engineering time, through the configuration tool, specifying the information required for the execution of the least one custom command control.

2. The method according to claim 1, wherein the at least one custom command control is selected from the group consisting of:
- a toolbar button which, when clicked at run time, opens up a pop-up window containing a given custom control;
- a toolbar command control, when activated at run-time, loads a given custom control which defines the layout and the functionality of the toolbar command control;
- a toolbar button which, when clicked at run-time, calls a method implemented in a custom library.

3. A method for displaying, at run time, a user-interface of a screen of a general purpose MES software application customized according to the method of any of the previous claims.

4. The method according to any of the previous **characterized in that** it is implemented in software.

5. A system having means for performing the steps of the method according to any of the previous claims.
